# EUROPEAN PATENT APPLICATION

(11) **EP 4 185 041 A1**
(43) Date of publication of application: **24.05.2023**
(21) Application number: 21841248.4
(22) Date of filing: 14.07.2021
(51) Int. Cl.: H04W 72/04

(54) **DATA PROCESSING METHOD AND DEVICE, COMMUNICATION NODE, AND COMPUTER-READABLE STORAGE MEDIUM**

(30) Priority: 17.07.2020 CN 202010694287
(71) Applicant: ZTE Corporation, Shenzhen, Guangdong 518057 (CN)
(72) Inventor: DENG, Hongwei, Shenzhen, Guangdong 518057 (CN); ZHANG, Shizhuang, Shenzhen, Guangdong 518057 (CN); GU, Jun, Shenzhen, Guangdong 518057 (CN); HAN, Wei, Shenzhen, Guangdong 518057 (CN); LIU, Lu, Shenzhen, Guangdong 518057 (CN)
(74) Representative: Ipsilon
(86) International application number: PCT/CN2021/106220
(87) International publication number: WO 2022/012582

(57) **Abstract**

The present disclosure relates to the field of wireless communication technology, and provides a method and a device for data processing, a communication node and a computer-readable storage medium. The method includes: acquiring configuration information of a neighboring cell by a communication node, with the configuration information including m horizontal beams staggered in time domain locations and n vertical beams, and both m and n being integers greater than 0; and sending service data of a local cell by the communication node according to the configuration information.

## Description

### CROSS-REFERENCE TO RELATED APPLICATION

The present disclosure claims the priority to the Chinese Patent Application No. 202010694287.8 filed on July 17, 2020, the entire contents of which are incorporated herein by reference.

### TECHNICAL FIELD

The present disclosure relates to the field of wireless communication technology.

### BACKGROUND

In the Rel-15 New Radio (NR) specification, flexible spatial scanning freedom is supported, and a three-dimensional space is to be scanned in a time division manner based on Synchronization Signal/Physical Broadcast Channel blocks (SS/PBCH blocks, or SSBs). For example, in general networking schemes of operators, a single wide beam may be adopted to achieve full cell coverage, or a combination of a plurality of SSB horizontal narrow beams may be adopted to quickly achieve high-quality coverage and good networking performance.

### SUMMARY

In an aspect, the present disclosure provides a method for data processing, including: acquiring configuration information of a neighboring cell by a communication node, with the configuration information including m horizontal beams staggered in time domain locations and n vertical beams, and both m and n being integers greater than 0; and sending service data of a local cell by the communication node according to the configuration information.

In another aspect, the present disclosure provides a device for data processing, including: an acquisition module configured to acquire configuration information of a neighboring cell, with the configuration information including m horizontal beams staggered in time domain locations and n vertical beams, and both m and n being integers greater than 0; and a communication module configured to send service data of a local cell according to the configuration information.

In still another aspect, the present disclosure provides a communication node, including: a memory, a processor, a program stored on the memory and being executable on the processor, and a data bus configured to enable connection and communication between the processor and the memory; the program, when executed by the processor, causes the processor to implement at least one operation of the method for data processing provided by the present disclosure.

In yet another aspect, the present disclosure provides a computer-readable storage medium storing thereon at least one program, and the program, when executed by at least one processor, causes the at least one processor to implement at least one operation of the method for data processing provided by the present disclosure.

### BRIEF DESCRIPTION OF DRAWINGS

FIG. 1 is a flowchart illustrating a method for data processing according to the present disclosure.
FIG. 2 is a schematic diagram of configuration information according to the present disclosure.
FIG. 3 is a schematic diagram illustrating a transmission of service data according to configuration information according to the present disclosure.
FIG. 4 is a schematic diagram illustrating a transmission of service data according to configuration information according to the present disclosure.
FIG. 5 is a schematic diagram of configuration information according to the present disclosure.
FIG. 6 is a schematic diagram illustrating a transmission of service data according to configuration information according to the present disclosure.
FIG. 7 is a schematic diagram illustrating a transmission of service data according to configuration information according to the present disclosure.
FIG. 8 is a schematic structural diagram of a device for data processing according to the present disclosure.
FIG. 9 is a schematic structural diagram of a communication node according to the present disclosure.

### DETAIL DESCRIPTION OF EMBODIMENTS

In order to make objectives, technical solutions and advantages of the present disclosure clearer, embodiments of the present disclosure are further described in detail below with reference to the drawings. It should be noted that the embodiments of the present disclosure and the features therein may be arbitrarily combined with one another if no conflict is incurred.

In addition, the terms "optionally", "illustratively" and the like used in the embodiments of the present disclosure are used for giving examples, illustrating or describing. Any implementation or design scheme described with "optionally" or "illustratively" in the embodiments of the present disclosure should not to be interpreted as being preferred or being advantageous relative to the other implementations or design schemes. To be exact, the terms "optionally", "illustratively" and the like are used to present relevant concepts in a specific way.

In networking schemes of operators, the single wide beam may be adopted to achieve the full cell coverage, or the combination of the plurality of SSB horizontal narrow beams may be adopted to quickly achieve the high-quality coverage and the good networking performance. However, for the first networking scheme, a coverage area is limited to a certain extent due to a loss of shaped gain and poor anti-interference capability of the wide beam; and the second networking scheme is poor in expansibility and limited in vertical coverage, and if the vertical coverage is to be expanded, the number of the horizontal beams is desired to be reduced, which may cause a loss of horizontal coverage performance. Moreover, horizontal-vertical adjustment and optimization linked are desired to be frequently carried out in order to adapt to changing of an environment, which increases difficulty of network optimization. Meanwhile, the number of times of circularly sending System Information Blocks (SIB) and Paging messages (Paging) in turn is increased due to excessive beams, which causes relatively large overheads of NR resources and power consumption.

In view of above, the present disclosure provides a method and a device for data processing, a communication node, and a computer-readable storage medium, and aims to reduce mutual interference between neighboring cells, reduce difficulty for network planning and optimization, and improve flexibility of network deployment.

In order to facilitate understanding of the technical solutions provided by the present disclosure, concepts related to the present disclosure are illustratively explained below for reference.

SSB: for cell searching, synchronization, channel measurement and beam management, and mainly including a Primary Synchronization Signal (PSS), a Secondary Synchronization Signal (SSS), and a Master Information Block (MIB).

SIB (System Information Block): including a first SIB (SIB1) and Other System Information (OSI), and mainly for issuing public configuration of cell wireless resources, cell reselection, warning for earthquake/tsunami, or the like.

Paging: for notifying a User Equipment (UE) of a change of system information or notifying the UE to access a network.

PDSCH (Physical Downlink Shared Channel): for transmission of a data service.

PDCCH (Physical Downlink Control Channel): for transmission of scheduling control information.

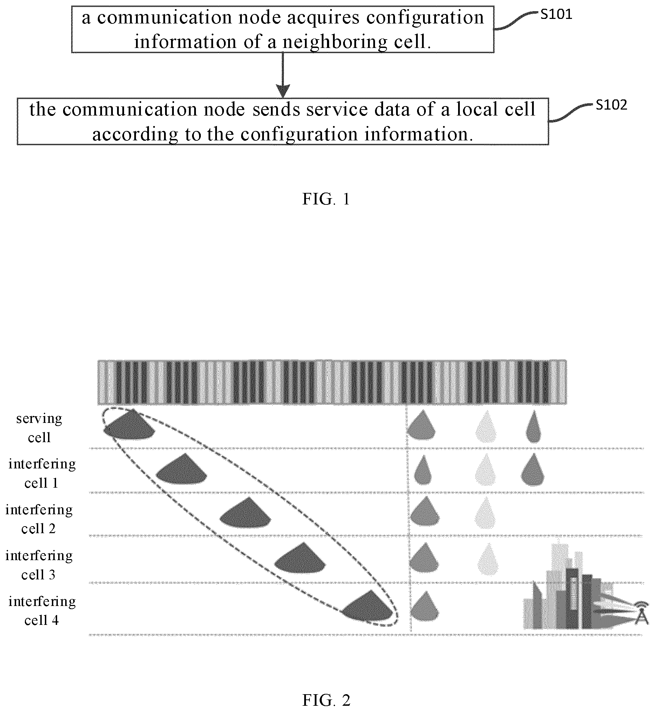

An embodiment of the present disclosure provides a method for data processing. As shown in FIG. 1, the method includes following operations S101 and S102.

In operation S101, a communication node acquires configuration information of a neighboring cell.

Illustratively, the configuration information in the present disclosure may include m horizontal beams staggered in time domain locations and n vertical beams, and both m and n are integers greater than 0.

The communication node in the present disclosure may be a base station, that is, the operation may be interpreted as that the base station acquires configuration information of beams in a horizontal direction and a vertical direction of the neighboring cell.

In operation S102, the communication node sends service data of a local cell according to the configuration information.

After acquiring the configuration information of the beams in the horizontal direction and the vertical direction of the neighboring cell, the communication node may send the service data related to the local cell in the local cell according to the configuration information. For example, the communication node may send the service data on a PDSCH by means of adjusting rate matching, restricting scheduling or the like according to the configuration information of the neighboring cell.

Since the horizontal beams are distributed in a staggered manner in time domain locations according to the configuration information of the neighboring cell, the number of the beams of the cell may be reduced. Further, during the communication node sending the service data according to the configuration information of the neighboring cell, mutual interference between neighboring cells may be reduced.

According to the method for data processing provided by the present disclosure, the communication node acquires the configuration information of the neighboring cell, with the configuration information including m horizontal beams staggered in time domain locations and n vertical beams, and both m and n being integers greater than 0, and the communication node sends the service data of the local cell according to the configuration information. With the horizontal beams staggered in time domain locations, the number of the beams of the cell can be reduced, and an overhead of NR resources can be reduced; meanwhile, mutual interference between neighboring cells may be reduced by sending the service data according to the configuration information. Moreover, with such configurations of horizontal-vertical beams, difficulty for network planning and optimization can be reduced and flexibility of the network deployment can be improved.

In an implementation, the horizontal beams configured above may be wide beams, and the vertical beams configured above may be wide beams and/or narrow beams. That is, the wide beams are configured to provide road basic coverage in the horizontal direction, so that the number of the beams for the cell may be reduced; and with the wide beams staggered in time domain locations, mutual interference between neighboring cells may be reduced. The wide beams and/or the narrow beams may be flexibly selected in the vertical direction according to coverage expectations. For example, in a scenario of a relatively large area of densely distributed buildings, a plurality of wide beams with different downtilt angles may be configured to achieve the vertical coverage; and in a scenario with a relatively low density of buildings, a plurality of narrow beams may be configured to achieve the vertical coverage. Certainly, both the wide beams and the narrow beams may be deployed in the vertical direction according to an actual coverage expectation.

It should be noted that the vertical beams may also be staggered in time domain locations in a case where sufficient time domain locations are provided, so that interference between neighboring cells in the vertical direction is reduced.

In an implementation, the operation S101 of the communication node acquiring the configuration information of the neighboring cell may be implemented by carrying out following operations. For example, in a case where configuration information of all neighboring cells and the local cell is configured in the communication node, the communication node may directly acquire the configuration information of the neighboring cell from the configuration information stored in the communication node. In a case where merely the configuration information of the local cell is configured in the communication node, the communication node may communicate with a communication node of the neighboring cell via a communication interface between the cells, so as to acquire the configuration information of the neighboring cell.

In an implementation, the operation S102 of sending the service data of the local cell according to the configuration information may be implemented by following modes, but is not limited thereto.

For example, in a case where the configuration information is about a configured SSB location of the neighboring cell, the communication node may send, in the local cell, the service data related to the local cell at a location except for the SSB location of the neighboring cell. Alternatively, in a case where the configuration information is about a configured SIB location or a configured Paging transmission location of the neighboring cell, the communication node may send, in the local cell, the service data related to the local cell at a location except for the SIB location or the Paging transmission location of the neighboring cell, that is, during the communication node sending the service data of the local cell, the communication node may send the service data in the local cell by bypassing or avoiding the SSB location, the SIB location or the Paging transmission location of the neighboring cell, thereby reducing interference between neighboring cells.

In the present disclosure, with the wide beams configured in the horizontal direction, higher transmission power can be adopted to improve beam coverage performance; meanwhile, since the number of the beams of the cell is reduced, the number of times of sending SSB/SIB/Paging by the communication node can be reduced, which can greatly reduce an overhead of system resources and power consumption compared with the networking scheme using the narrow beams.

An implementation process of the scheme mentioned above will be further illustrated by referring to an example. For example, eight low-frequency SSB beams are taken as an example.

As shown in FIG. 2, assuming that one wide beam is configured to provide basic coverage in the horizontal direction, the wide beams may be configured in a staggered manner in the horizontal direction in Physical Cell Identifier (PCI) mod5, the wide beams for different cells are configured in different time domains, and the wide beams between neighboring cells in the horizontal direction do not interfere with each other. At most three beams are configured in the vertical direction, as shown in FIG. 2, merely one wide beam is configured for an interfering cell 4 in the vertical direction, and the wide beam and the narrow beam may be simultaneously configured for each of interfering cells 1 to 3. In the present disclosure, a beam with a relatively large included angle in the vertical direction may be regarded as a wide beam, and a beam with a relatively small included angle in the vertical direction may be regarded as a narrow beam.

In such way, after acquiring the configuration information of each neighboring cell, the communication node can avoid or bypass time domain/frequency domain locations specified in the configuration information of neighboring cells and send the service data in the local cell by means of limiting scheduling, rate matching, or the like.

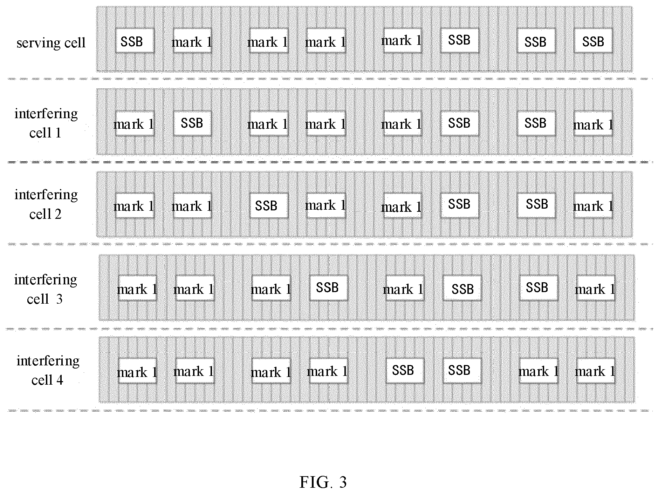

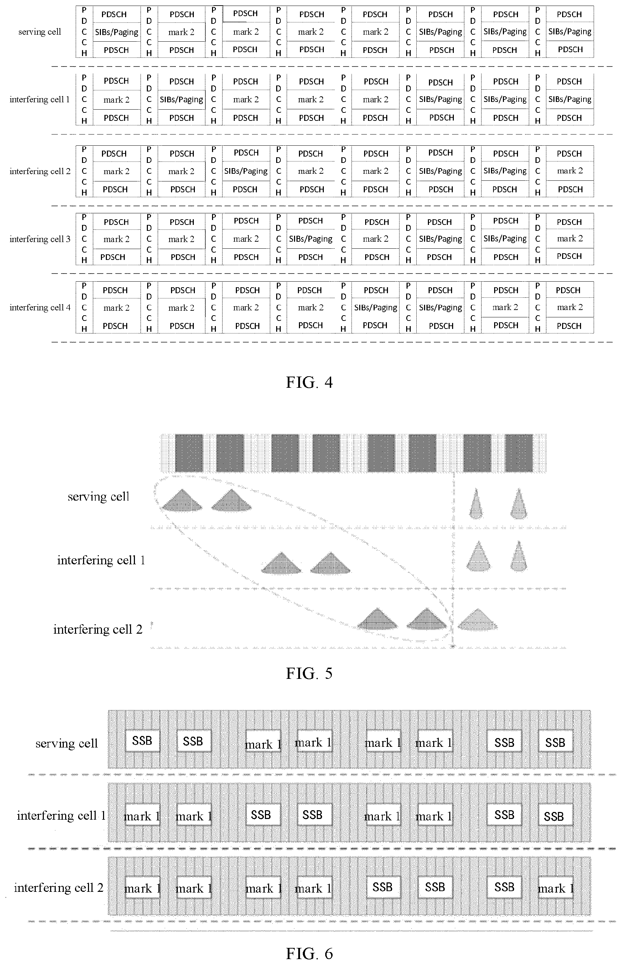

As shown in FIG. 3, if the configuration information is about the SSB location of each cell, after acquiring the configuration information of each neighboring cell, the communication node may acquire SSB locations of the neighboring cell and then mark the SSB locations of the neighboring cell. For example, as shown in FIG. 3, a mark 1 may be set at each SSB location of the neighboring cell, so that transmission of the service data may be performed at a time domain/frequency domain location except for locations with marks 1. If the configuration information is about the SIB location or the Paging transmission location of each cell, the communication node may set a mark 2 at each SIB location or each Paging transmission location of each neighboring cell in a way illustrated by FIG. 4, and transmit the service data at a time domain/frequency domain location of PDSCH except for loations with marks 2. In an implementation, as shown in FIG. 5, assuming that two wide beams are configured to provide basic coverage in the horizontal direction, for example, the two wide beams have different horizontal downtilt angles, one wide beam is configured for near-point horizontal coverage and the other wide beam is configured for far-point horizontal coverage. The wide beams are configured in a staggered manner in the horizontal direction in PCI mod3. At most two beams are configured in the vertical direction, for example, two narrow beams are configured for each of the serving cell and the interfering cell 1, and one wide beam is configured for the interfering cell 2.

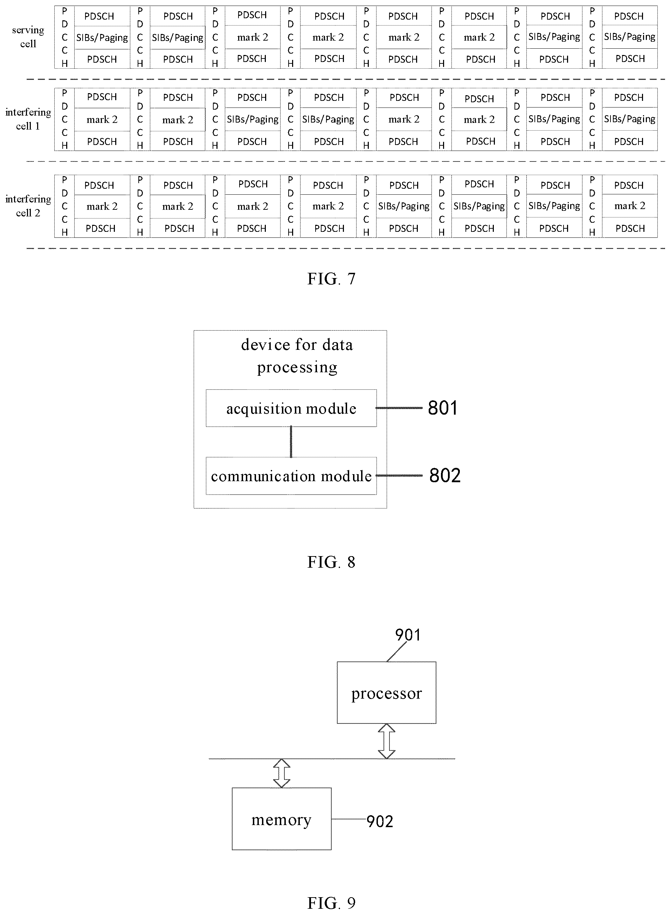

Based on the configuration modes mentioned above, after the communication node acquires the configuration information, if the configuration information is the configuration information about the SSB location, as shown in FIG. 6, the communication node may set the mark 1 at each SSB location of each neighboring cell in a way illustrated by FIG. 6, and transmit the service data at a time domain/frequency domain location except for SSB locations (that is, locations with marks 1) of the neighboring cell. If the configuration information is the configuration information about the SIB location or the Paging transmission location of each cell, the communication node may set the mark 2 at each SIB location or each Paging transmission location of each neighboring cell in a way illustrated by FIG. 7, and then transmit the service data at a time domain/frequency domain locations of PDSCH except for SIB locations or Paging transmission locations (that is, locations with marks 2) of the neighboring cell.

It should be noted that the communication node may send scheduling control information at PDCCH locations marked in FIG. 4 and FIG. 7.

With the configuration modes mentioned above, the number of the beams configured for networking can be effectively reduced and the number of times of circularly sending SSB/SIB/Paging beams can also be reduced, so that the overhead of the NR resources can be reduced; moreover, service capacity can be increased under a relatively high load and power consumption of equipment can be reduced under a relatively low load. Further, since the configuration information of the neighboring cell is acquired, corresponding locations can be avoided or bypassed during sending the service data in the local cell, thereby reducing data interference between cells.

Compared with a scheme of using eight narrow beams to realize coverage in the existing technology, the scheme provided by the present disclosure can increase a coverage area by 3dB to 5dB and save more than 5% of physical resources, and more than 10% of power consumption of equipment can be reduced under a relatively light load.

An embodiment of the present disclosure further provides a device for data processing. As shown in FIG. 8, the device includes: an acquisition module 801 and a communication module 802.

The acquisition module 801 is configured to acquire configuration information of a neighboring cell. The configuration information includes m horizontal beams staggered in time domain locations and n vertical beams, and both m and n are integers greater than 0. The communication module 802 is configured to send service data of a local cell according to the configuration information.

Illustratively, the horizontal beams are wide beams, and the vertical beams are wide beams and/or narrow beams.

In an implementation, the acquisition module 801 may be configured to acquire the configuration information of the neighboring cell from configuration information stored in the device for data processing, or communicate with a communication node of the neighboring cell via a communication interface to acquire the configuration information of the neighboring cell.

In an implementation, in a case where the configuration information is about an SSB location of the neighboring cell, the communication module 802 may send the service data of the local cell at a location except for the SSB location of the neighboring cell, and in a case where the configuration information is about an SIB location or a Paging transmission location of the neighboring cell, the communication module 802 may send the service data of the local cell at a location except for the SIB location or the Paging transmission location of the neighboring cell.

The device for data processing provided by the present disclosure may be used to implement the method for data processing shown in FIG. 1, and an implementation principle and technical effects of the device for data processing are similar to those of the method for data processing, and thus will not be repeated here.

An embodiment of the present disclosure further provides a communication node. As shown in FIG. 9, the communication node includes a processor 901 and a memory 902. One or more processors 901 may be provided in the communication node, and a case where the communication mode includes one processor 901 is taken as an example in FIG. 9. The processor 901 and the memory 902 in the communication node may be connected through a bus or by other means, and FIG. 9 illustrates an example in which the processor 901 and the memory 902 are connected through the bus.

As a computer-readable storage medium, the memory 902 may be configured to store software programs, computer-executable programs and modules, such as program instructions/modules (e.g., the acquisition module 801 and the communication module 802 in the device for data processing) corresponding to the method for data processing shown in FIG. 1. The processor 901 carries out the method for data processing provided by the present disclosure by executing the software programs, instructions and modules stored in the memory 902.

The memory 902 may mainly include a program storage region and a data storage region, and the program storage region is capable of storing an operating system and an application program for at least one function. The data storage region is capable of storing data created according to usage of the communication node. Further, the memory 902 may include a high-speed Random Access Memory (RAM), or may include a non-volatile memory, such as at least one magnetic storage device, a flash memory, or any other non-volatile solid-state device.

An embodiment of the present disclosure further provides a computer-readable storage medium having stored thereon one or more programs, the one or more programs, when executed by one or more processors, cause the one or more processors to implement a method for data processing, and the method includes: acquiring configuration information of a neighboring cell by a communication node, with the configuration information including m horizontal beams staggered in time domain locations and n vertical beams, and both m and n being integers more than 0; and sending service data of a local cell by the communication node according to the configuration information.

It should be understood by those of ordinary skill in the art that the functional modules/units in all or some of the operations of the method disclosed above and the functional modules/units in the communication node may be implemented as software, firmware, hardware, or suitable combinations thereof.

In an implementation of hardware, the division between the functional modules/units stated above is not necessarily corresponding to the division of physical components; for example, one physical component may have a plurality of functions, or one function or operation may be performed through cooperation of several physical components. Some or all of the physical components may be implemented as software to be executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable medium used in any method or technology for storing information (such as computer-readable instructions, data structures, program modules and other data). The computer storage medium includes, but is not limited to, an RAM, a Read Only Memory (ROM), an Electrically Erasable Programmable Read Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated data signals such as carrier wave or other transmission mechanism, and may include any information delivery medium.

Merely exemplary embodiments of the present disclosure are illustrated above with reference to the drawings, but the claimed scope of the present disclosure is not limited thereto. Any modification, equivalent replacement and improvement made by those of ordinary skill in the art without departing from the scope and essence of the present disclosure should be included in the claimed scope of the present disclosure.

## Claims

1. A method for data processing, comprising:
acquiring configuration information of a neighboring cell by a communication node; wherein the configuration information comprises m horizontal beams staggered in time domain locations and n vertical beams, and both m and n are integers greater than 0; and
sending service data of a local cell by the communication node according to the configuration information.

2. The method of claim 1, wherein the horizontal beams are wide beams, and the vertical beams are wide beams and/or narrow beams.

3. The method of claim 1 or 2, wherein the acquiring configuration information of a neighboring cell by a communication node comprises:
acquiring the configuration information of the neighboring cell by the communication node from configuration information stored in the communication node; or
communicating with a communication node of the neighboring cell by the communication node via a communication interface, so as to acquire the configuration information of the neighboring cell.

4. The method of claim 3, wherein the sending service data of a local cell by the communication node according to the configuration information comprises:
in response to that the configuration information is about a Synchronization Signal/Physical Broadcast Channel block, SSB, location of the neighboring cell, sending the service data of the local cell by the communication node at a location except for the SSB location of the neighboring cell.

5. The method of claim 3, wherein the sending service data of a local cell by the communication node according to the configuration information comprises:
in response to that the configuration information is about a System Information Block, SIB, location or a Paging transmission location of the neighboring cell, sending the service data of the local cell by the communication node at a location except for the SIB location or the Paging transmission location of the neighboring cell.

6. A device for data processing, comprising:
an acquisition module configured to acquire configuration information of a neighboring cell; wherein the configuration information comprises m horizontal beams staggered in time domain locations and n vertical beams, and both m and n are integers greater than 0; and
a communication module configured to send service data of a local cell according to the configuration information.

7. The device of claim 6, wherein the horizontal beams are wide beams, and the vertical beams are wide beams and/or narrow beams.

8. The device of claim 6 or 7, wherein,
the acquisition module is configured to acquire the configuration information of the neighboring cell from configuration information stored in the device; or
the acquisition module is configured to communicate with a communication node of the neighboring cell via a communication interface to acquire the configuration information of the neighboring cell.

9. A communication node, comprising: a memory, a processor, a program stored on the memory and being executable on the processor, and a data bus configured to enable connection and communication between the processor and the memory; wherein, the program, when executed by the processor, causes the processor to implement the method for data processing of any one of claims 1 to 5.

10. A computer-readable storage medium having stored thereon one or more programs, the one or more programs, when executed by one or more processors, cause the one or more processors to implement the method for data processing of any one of claims 1 to 5.
